(19) Europäisches Patentamt / European Patent Office / Office européen des brevets

(11) **EP 4 293 280 B1**

(12) **EUROPEAN PATENT SPECIFICATION**

(45) Date of publication and mention
of the grant of the patent:
**20.08.2025 Bulletin 2025/34**

(21) Application number: **23173057.3**

(22) Date of filing: **12.05.2023**

(51) International Patent Classification (IPC):
*F21V 8/00* (2006.01)   *G02B 5/18* (2006.01)
*G02B 27/00* (2006.01)   *G02B 27/01* (2006.01)

(52) Cooperative Patent Classification (CPC):
**G02B 6/0033; G02B 5/1819; G02B 5/1857;**
**G02B 6/005; G02B 6/0065; G02B 27/0012;**
G02B 27/0172; G02B 2027/0125; G02B 2027/0174

(54) **DIFFRACTIVE OPTICAL WAVEGUIDE, DESIGN METHOD AND FORMATION METHOD THEREOF, AND DISPLAY DEVICE**

DIFFRAKTIVER OPTISCHER WELLENLEITER, ENTWURFSVERFAHREN UND HERSTELLUNGSVERFAHREN DAFÜR UND ANZEIGEVORRICHTUNG

GUIDE D'ONDES OPTIQUE DIFFRACTIF, PROCÉDÉ DE CONCEPTION ET PROCÉDÉ DE FORMATION DE CELUI-CI, ET DISPOSITIF D'AFFICHAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.05.2022 CN 202210522591**

(43) Date of publication of application:
**20.12.2023 Bulletin 2023/51**

(73) Proprietor: **Jiaxing Uphoton Optoelectronics Technology Co., Ltd.**
**Tongxiang City Jiaxing, Zhejiang 314500 (CN)**

(72) Inventors:
• **FAN, Zhentao**
**Jiaxing City, Zhejiang Province 314500 (CN)**
• **ZHAO, Xingming**
**Jiaxing City, Zhejiang Province 314500 (CN)**
• **TIAN, Kehan**
**Jiaxing City, Zhejiang Province 314500 (CN)**

(74) Representative: **Kraus & Lederer PartGmbB**
**Thomas-Wimmer-Ring 15**
**80539 München (DE)**

(56) References cited:
**WO-A1-2022/049104      US-A1- 2020 110 261**

• **KONG DEQING ET AL: "Optimization of gratings in a diffractive waveguide using relative-direction-cosine diagrams", OPTICS EXPRESS, vol. 29, no. 22, 25 October 2021 (2021-10-25), US, pages 36720, XP093097669, ISSN: 1094-4087, DOI: 10.1364/OE.433515**

**Description**

FILED OF THE INVENTION

The present invention relates to a display technology based on diffraction, in particular to a diffractive optical waveguide, its formation method, and a display device with the diffractive optical waveguide.

BACKGROUND

Diffraction-based display technology has developed rapidly in recent years, and it can be applied to display devices such as near-eye display devices, head-mounted display devices, and head-up display devices. A diffractive optical waveguide is an important optical device that can be used in diffraction display technology. The diffractive optical waveguide that can be used for display is provided with a coupling-in grating and a coupling-out grating on the waveguide substrate; the coupling-in grating couples incident light carrying image information into the waveguide substrate; the coupling-out grating propagates and expands the light carrying image information, and at the same time couples the light out of the waveguide substrate to form a coupled-out light field. Eyes receive the light of the coupled-out light field so that, for example, an image carried by the incident light can be observed.

A coupling-out grating of a diffractive optical waveguide can adopt a two-dimensional grating structure, and in the two-dimensional grating structure, an optical unit structure usually adopts a circular, rectangular, or rhombic structure in cross-section. When light is coupled into such a coupling-out grating, there will be a bright line in the middle in the image. At the same time, it will lead to the reduction of splitted light energy on both sides, which is unfavorable for the expansion of light energy to both sides and affects the light uniformity of the waveguide.

In order to improve brightness and uniformity, different cross-sectional shapes of the optical unit structure have been proposed. However, on one hand, it is difficult to design a cross-sectional shape of a unit structure that can significantly improve brightness and uniformity; on the other hand, it is difficult to guarantee the processing accuracy of some cross-sectional shapes, and the shape after processing has poor conformity with respect to the designed shape, which is unfavorable for regulating the distribution of diffraction performance of the diffractive optical waveguide. Therefore, it is urgent to propose a new diffractive optical waveguide and design and formation methods for the same to overcome the above problems.

US20200110261A1 discloses a waveguide for use in an AR or VR display, which includes a plurality of optical structures of different refractive index from a surrounding waveguide medium. The optical structures are arranged in an array to provide at least two diffractive optical elements overlaid on one another in the waveguide. The optical structures have a shape, when viewed in the plane of the waveguide, comprising a plurality of substantially straight sides having respective normal vectors at different angles, for example a shape of rhombus with the upper and lower apexes have 120° angles.

WO2022049104A1 discloses a diffraction grating for use as an output element of a diffractive waveguide combiner for an AR or VR display as well as a method for designing the grating. The method is described to be based on three-dimensional geometry modeling techniques/systems which typically provide a wide variety of geometry modeling processes for the construction and manipulation of three-dimensional geometry, including tools for extruding, lofting and sweeping 2D profiles, 3D geometry primitives, tools for the generation and manipulation of polygon meshes and tools for the creation and manipulation of curved surfaces, which can be used to represent a wide range of geometry. It is also disclosed that modifications to a geometry representation of the grating may be appropriate in order to have a geometry that better matches the limits of manufacturing processes or may be analogous to steps of a manufacturing process, and examples of such modifications include rounding modification, and the shape of rounding itself may be described using various curved geometry.

SUMMARY

The invention aims to provide a diffractive optical waveguide, its formation method, and a display device comprising the diffractive optical waveguide, so as to at least partly overcome the deficiencies in the prior art.

The invention is set out in the appended set of claims.

In the diffractive optical waveguide according to embodiments of the present invention, the cross-section of the optical unit structure has a specific curved contour, whose edges are smooth and have very good processability. This is conducive to realizing high-precision conformity and mass production. In addition, the cross-section with curve contour of the optical unit structure has a very high degree of design freedom, which can be used to realize a better control of the distribution of the coupling-out efficiency of the diffractive optical waveguide, and thus is conducive to achieving high coupling-out efficiency and high uniformity. A display device having such a diffractive optical waveguide has the advantages of high brightness and high uniformity accordingly.

The waveguide formation method according to embodiments of the present invention has a very high degree of design freedom, and can have a better control of the distribution of the coupling-out efficiency of the diffractive optical waveguide, by designing the cross-section of the optical unit structure based on curve equations, which is conducive to obtaining a better design for the diffractive optical waveguide with better performance.

BRIEF DESCRIPTION OF THE DRAWINGS

Other features, objects, and advantages of the invention will become more apparent by reading the following detailed description of non-limitative embodiments with reference to the following drawings.

Fig.1 schematically shows a diffractive optical waveguide according to embodiments of the present invention;
Fig.2 shows an example of a cross-section of an optical unit structure of a grating structure of the diffractive optical waveguide;
Fig.3 shows a partial schematic diagram of grating structures composed of optical unit structures having a rhombic cross-section and the cross-section shown in Fig.2;
Fig.3A is a simulation diagram of the light intensity distribution of diffractive optical waveguides comprising different grating structures shown in Fig.3;
Fig.4 shows a variant of the cross-section of the optical unit structure shown in Fig.2, which is a cross-sectional shape designed by rounding based on the cross-section shown in Fig.2;
Fig.5 shows a partial schematic diagram of grating structures composed of optical unit structures having four cross sections with different radii of curvature of the rounded corner (fillet-radii);
Fig.5A is a simulation diagram of the light intensity distribution of diffractive optical waveguides comprising the different grating structures shown in Fig.5;
Fig.6 shows another example of the cross-section of the optical unit structure of the grating structure of the diffractive optical waveguide and a variant of this example obtained by rounding;
Fig.6A is a simulation diagram of the light intensity distribution of diffractive optical waveguides comprising optical unit structures with the different cross-sections shown in Fig.6;
Fig.7 shows another example of the cross-section of the optical unit structure of the grating structure of the diffractive optical waveguide and a variant of this example obtained by rounding;
Fig.8 shows a partial schematic diagram of a grating structure composed of optical unit structures having a rhombic cross-section and the cross-section shown in Fig.7;
Fig.8A is a simulation diagram of the light intensity distribution of diffractive optical waveguides comprising different grating structures shown in Fig.8;
Fig.9 shows other different examples of the cross-section of the optical unit structure of the grating structure of the diffractive optical waveguide; and
Fig.10 is a flowchart of a waveguide design method, not according to the claimed invention.

DETAILED DESCRIPTION

The invention will be further described in detail in conjunction with drawings and embodiments. In addition, it should be noted that, for the convenience of description, only the parts related to the invention are shown in the drawings. It should be noted that, without conflicts, the embodiments in the present application and the features of the embodiments can be combined with each other.
Diffractive optical waveguides according to embodiments of the present invention will be described below with reference to the drawings.

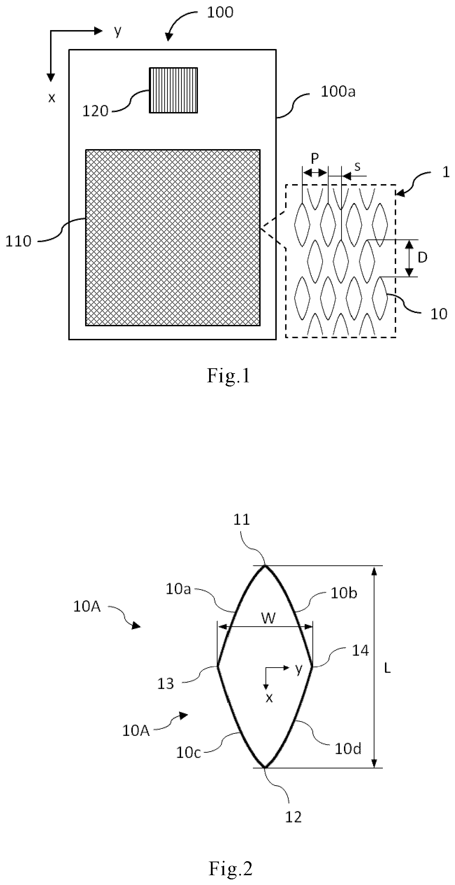

Fig.1 is a schematic diagram of a diffractive optical waveguide according to embodiments of the present invention. As shown in Fig.1, a diffractive optical waveguide 100 according to embodiments of the present invention comprises a waveguide substrate 110a and a grating structure 1 formed on the waveguide substrate 100a. In some embodiments, the grating structure 1 is formed as a coupling-out grating 110 for coupling at least a part of light propagating into it within the waveguide substrate 100a along a coupling-in direction, out of the waveguide substrate 100a through diffraction. Optionally, the diffractive optical waveguide 100 can further comprise a coupling-in grating 120 formed on the waveguide substrate 100a, and the coupling-in grating 120 is used to couple a beam irradiated thereon into the waveguide substrate 100a and make it propagate to the coupling-out grating 110 in the waveguide substrate 100a through total reflection.
The grating structure 1 comprises a plurality of optical unit structures 10 arranged in an array along/in a plane. This array of grating structures 1 is shown in the dashed box in the right part of Fig.1. The optical unit structure 10 is a columnar structure, which can be formed as a columnar concave structure, or as a columnar convex structure.
As shown in Fig.1, the array in the grating structure 1 comprises a plurality of rows extending along the y direction and formed by arranging the plurality of optical unit structures 10, the plurality of rows have a predetermined interval D in the x direction, the optical unit structures 10 in each row are arranged at a period P, and the optical unit structures 10 in two adjacent rows have a predetermined misalignment amount s in the y direction, and s=P/n, wherein 1<n ≤10, preferably n=2. In the following data examples, n=2 is taken as an example for the sake of convenience and clarity.

As shown in Fig.1, a coupling-in direction is parallel to the x direction, however, this is not necessary. Preferably, the coupling-in direction can be substantially parallel to the x direction.

Fig.2 shows an example of a cross-section of the optical unit structure 10. As shown in Fig.2, a cross-section 10A of the optical unit structure 10 as a whole has a shape with two small ends and a large middle part along the x direction, and has an upper vertex 11 and a lower vertex 12 in the x direction and a left vertex 13 and a right vertex 14 in the y direction perpendicular to the x direction. The upper vertex 11, the lower vertex 12, the left vertex 13, and the right vertex 14 each are convex extreme points of the contour of the cross-section. In the example shown in Fig.2, each of the upper vertex 11, the lower vertex 12, the left vertex 13, and the right vertex 14 is a single point.

As shown in Fig.2, a distance between the upper vertex 11 and the lower vertex 12 of the cross-section 10A in the x direction is the length L of the cross-section, and a maximum distance between the left vertex 13 and the right vertex 14 in the y direction is the maximum width W of the cross-section. In order to obtain suitable optical coupling-out efficiency and uniformity, the maximum width W satisfies $0.4L \leq W \leq 0.8L$.

According to embodiments of the present invention, a first contour curve 10a, a second contour curve 10b, a third contour curve 10c, and a fourth contour curve 10d are formed between the upper vertex 11 and the left vertex13, between the upper vertex 11 and the right vertex 14, between the lower vertex 12 and the left vertex 13, and between the lower vertex 12 and the right vertex 14, respectively. The first contour curve 10a and the second contour curve 10b are configured such that as approaching the upper vertex 11, the width of the cross-section in the y direction gradually decreases, and the third contour curve 10c and the fourth contour curve 10d are configured such that as approaching the lower vertex 12, the width of the cross-section in the y direction gradually decreases.

Preferably, each of the first contour curve 10a, the second contour curve 10b, the third contour curve 10c, and the fourth contour curve 10d is of a curved shape that arches toward the outside of the cross-section.

In this embodiment, the four contour curves can be expressed by four high-order curve equations, and high-order curve coefficient parameters of the contour curves can be adjusted to meet requirements for various coupling-out efficiency distributions for beam propagating in the coupling-out region.

In the example shown in Fig.2, a connecting line between the upper vertex 11 and the lower vertex 12 is parallel to the x direction, and this cross-section 10A of the optical unit structure 10 is symmetrical about the connecting line. This symmetrical shape is advantageous in applications of constructing a grating structure whose diffraction property is axisymmetric. In addition, in the example shown in Fig.2, a connecting line between the left vertex 13 and the right vertex 14 is parallel to the y direction, and the cross-section 10A is also symmetrical about this connecting line. In some other examples, the cross-section of the optical unit structure 10 is not limited to the above-mentioned situation but can have only one axis of symmetry, or can be of a non-axisymmetric shape.

In order to illustrate the technical effect of the diffractive optical waveguide 100 having the optical unit structure with the cross-section 10A shown in Fig.2 in terms of optical coupling efficiency and uniformity, Data Example 1 of the simulation calculation will be given below.

In the various data examples given below, the wavelength of light is 532nm; the refractive index of the material of the waveguide substrate and the grating structure is 1.82; the optical unit structure is formed as a concave structure with a depth of 57nm; in the array of the optical unit structure, the interval D=450nm, the period P=420nm, and misalignment amount s=P/2 as described above.

(Data Example 1)

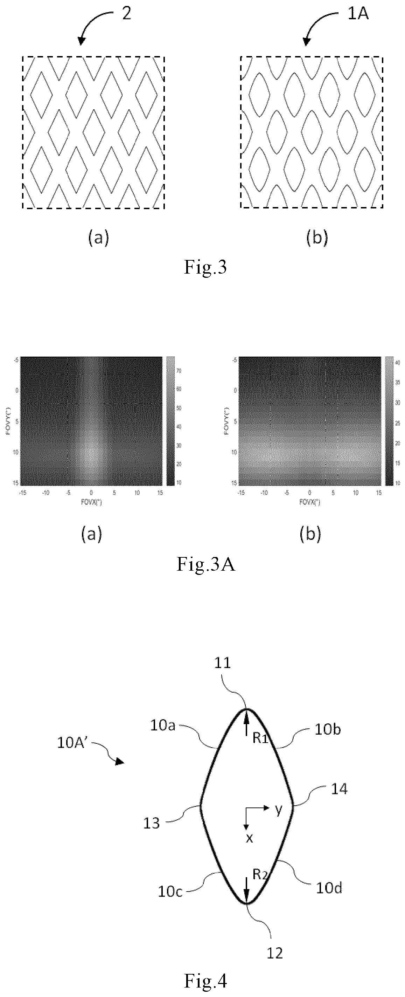

Graph (a) in Fig.3 shows a grating structure 2 composed of an optical unit structure with a rhombic cross-section, and graph (b) shows a partial schematic diagram of the grating structure 1A composed of the optical unit structure having the cross-section 10A shown in Fig.2. Specifically, the side length of the rhombus of the cross-section of the optical unit structure in the grating structure 2 is 272 nm, and the upper and lower vertex angles are 50°; the curve equations of the first to fourth contour curves of the cross-section 10A of the optical unit structure in the grating structure 1A are as follows:

the first contour curve 10a: $x=0.011y^2-0.786y-265.85$;
the second contour curve 10b: $x=0.011y^2+0.786y-265.85$;
the third contour curve 10c: $x=-0.011y^2+0.786y+265.85$;
the fourth contour curve 10d: $x=-0.011y^2-0.786y+265.85$,

wherein, the origin of the coordinates (x, y) in the above equations is located at the center of the cross-section as shown in Fig.2, and the unit of the x, y coordinate values is "nm". The length of the cross-section thus constructed is L=530nm, and the maximum width is W=248nm.

Based on the grating structure shown in Fig.3 and the same coupling-in light which enters the grating structure, the coupling-out efficiency and the nonuniformity index of different grating structures at a central position of eyebox are calculated by simulation, which are shown in Table 1:

[Table 1]

|  | Average efficiency of field of view on both sides | Average efficiency of middle field of view | Nonuniformity |
|---|---|---|---|
| Grating structure 2 | 2.34e-4 | 4.12e-4 | 27.6% |
| Grating structure 1A | 2.81e-4 | 2.73e-4 | 1.4% |

In this data example and the data examples below, "field of view on both sides" refers to the field of view with a field of view angle FOVX in the range of -15° ~-6 ° and 6 ° ~15 °, wherein the field of view angle FOVX is an angle formed with respect to the normal of the x-y plane in the direction of turning around the x-axis; and "middle field of view" refers to the field of view with the field of view angle FOVX in the range of -5°~5°. The above-mentioned average efficiency is the ratio of the average value of the light intensity of the coupled-out light field at each field of view angle to the light intensity of the coupling-in light of the grating structure, and the larger the value of the average efficiency means the higher the coupling-out efficiency. A middle bright line shown in the displayed image of the waveguide will be caused with a too high middle coupling-out efficiency.

In this data example and the following data examples, "nonuniformity" is the absolute value of the difference between the average efficiency of the field of view on both sides and the average efficiency of the middle field of view divided by the sum of the two, and the smaller the value of nonuniformity, the better the uniformity.

The light intensity distributions within the field of view angle range calculated by simulation are shown in Fig.3, wherein the left simulation graph (a) corresponds to the grating structure 2 and the right simulation graph (b) corresponds to the grating structure 1A. In every light intensity distribution diagram given in this data example and the data examples below, the maximum light intensities are displayed as of the same brightness/grayscale in the drawings, but the actual light intensities are different; and similarly, the minimum light intensities in respective light intensity distribution diagrams are displayed as of the same brightness/gray grayscale in the drawings, but the actual light intensities aer also different. The light intensity distributions shown in the light intensity distribution diagrams should be understood in combination with the coupling-out efficiencies and nonuniformity indicators given in this text.

It can be seen from Table 1 and Fig.3A that, in the coupled-out light field of the grating structure 2, the middle field of view has a significantly higher coupling-out efficiency than the field of view on both sides, and the nonuniformity is high, resulting in serious bright lines in the middle of the coupled-out light field; while in the coupled-out light field of the grating structure 1A, the coupling-out efficiency of the field of view on both sides is slightly higher than that of the grating structure 2, the difference in coupling-out efficiency between the middle field of view and the field of view on both sides is small, the uniformity is high, and thus the overall light field is relatively uniform. As explained above, the curve contour with the cross-section shown in Fig.2 can effectively improve the coupling-out efficiency of the field of view on both sides, and significantly suppress the middle bright line.

According to embodiments of the present invention, as a variant of the cross-section of the optical unit structure shown in Fig.2, in order to remove the sharp corners of the cross-sectional contour at the intersection of the contour curves to facilitate processing and improve the conformity with the design shape, at least one of upper vertex, lower vertex, left vertex and right vertex of the cross-section can be rounded so that there is a continuously differentiable curve contour at the place. Preferably, the cross-section of the optical unit structure 10 has a continuously differentiable curve contour at all of the upper vertex, the lower vertex, the left vertex, and the right vertex.

Fig.4 shows a variant of the cross-section of the optical unit structure shown in Fig.2, that is, cross-section 10A'. As shown in Fig.4, in the cross-section 10A', the first contour curve 10a and the second contour curve 10b are smooth and continuous at the upper vertex 11 and have an upper radius of curvature $R_1$, and the third contour curve 10c and the fourth contour curve 10d are smooth and continuous at the lower vertex 12 and have a lower radius of curvature $R_2$. In the example shown in Fig.4, the cross-section 10A' is also rounded at the left vertex 13 and right vertex 14 to make the contour smooth and continuous.

Simulation calculation shows the preferred radii of curvature. For details, see Data Example 2 below.

(Data Example 2)

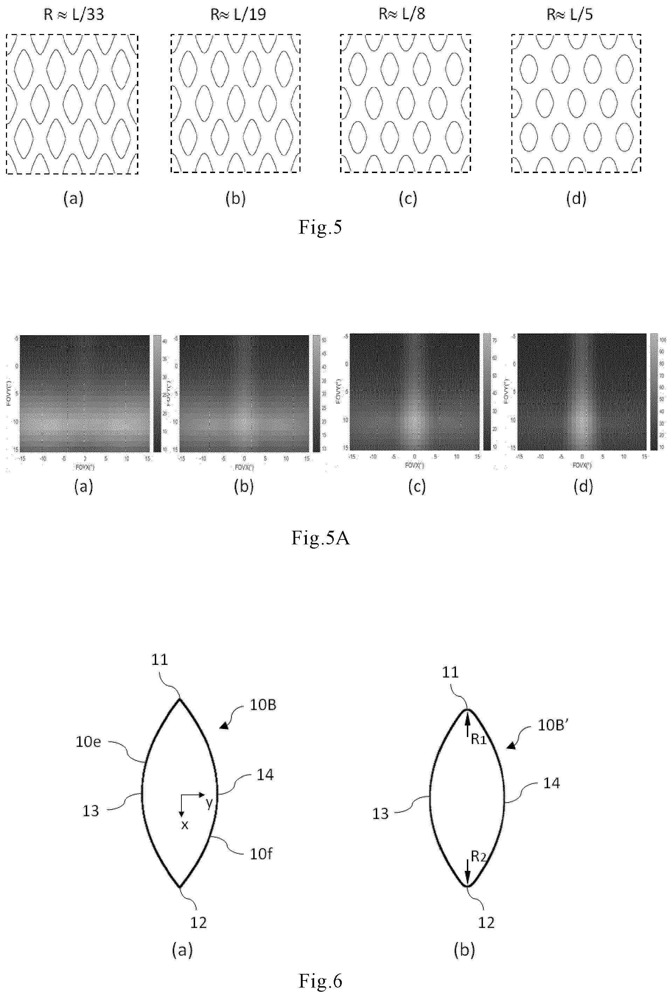

Fig.5 is a partial schematic diagram of four different grating structures obtained by rounding the upper and the lower vertices of the cross-section of the optical unit structure with different radii of curvature based on the grating structure 1A in Data Example 1, wherein $R_1=R_2=R$ in each structure, and R=15nm≈L/33 in the grating structure of figure (a); R=25nm≈L/19 in the grating structure of figure (b); R=55nm≈L/8 in the grating structure of figure (c) /8; R=75nm≈L/5 in the grating structure of figure (d).

Based on the above-mentioned grating structure shown in Fig.5 and the same coupling-in light conditions into the grating structure as the Data Example 1, the coupling-out efficiency and the nonuniformity index of the grating structure at the center of its eyebox calculated by simulation are shown in Table 2:

[Table 2]

| | Average efficiency of field of view on both sides | Average efficiency of middle field of view | Nonuniformity |
|---|---|---|---|
| **R≈L/33** | 2.81e-4 | 2.79e-4 | 0.4% |
| **R≈L/19** | 2.73e-4 | 3.23e-4 | 8.4% |
| **R≈L/8** | 2.54e-4 | 4.10e-4 | 23.5% |
| **R≈L/5** | 2.25e-4 | 5.47e-4 | 41.7% |

The light intensity distribution diagrams within the field of view angle range obtained by simulation calculations are shown in Fig.5A, wherein the light intensity distribution diagrams of graphs (a), (b), (c), and (d) in Fig.5A correspond to the grating structures of graphs (a), (b), (c), (d) in Fig.5, respectively.

It can be seen from Table 2 and Fig.5A that, rounding with an appropriate radius of curvature at the upper and the lower vertices of the above-mentioned curve contour of the cross-section can further suppress the middle bright line; as the upper and the lower radii of curvature increase, the effect of suppressing the middle bright line will attenuate, and when the radii of curvature $R_1$ and $R_2$ reach above L/8, the middle bright line will start to stand out. On the other hand, it can be seen that, as the upper and the lower radii of curvature decrease, uniformity can be substantially improved with both suppressed middle bright line and brightened field of view on both sides, especially, when the radii of curvature $R_1$ and $R_2$ are equal to or less than L/19. According to embodiments of the present invention, the radii of curvature of the cross-section of the optical unit structure at the upper and the lower vertices are less than or equal to L/19.

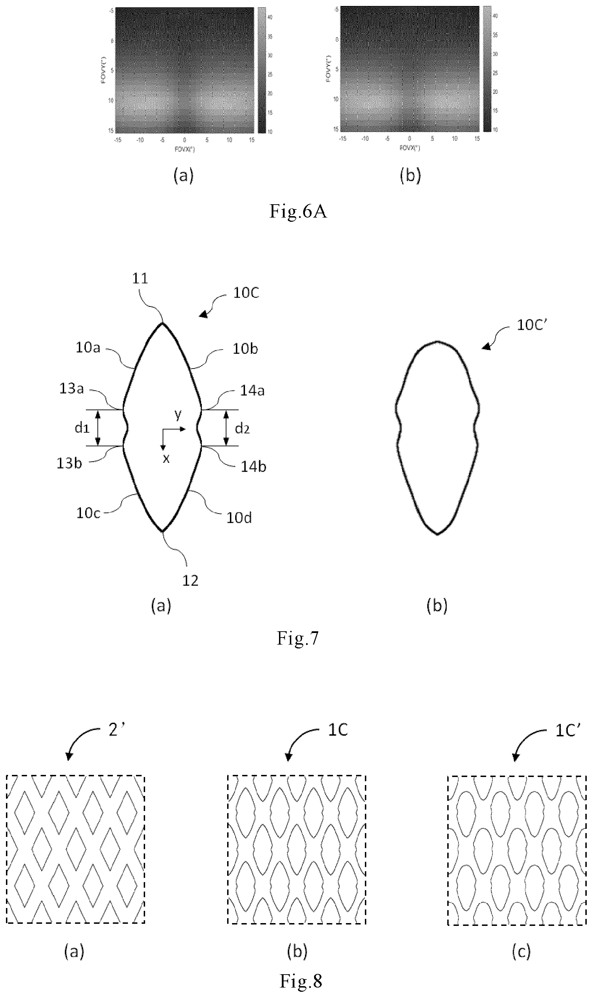

Next, another example of the cross-section of the optical unit structure according to embodiments of the present invention and its variant will be introduced with reference to Fig.6 and Fig.6A.

Graph (a) and graph (b) in Fig.6 show another example of the cross-section of the optical unit structure which is not according to embodiments of the present invention (that is, cross-section 10B) and a variant of this example after rounding (that is, cross-section 10B') which is according to embodiments of the present invention, respectively. The differences between the cross-sections 10B, 10B' shown in Fig.6 and the cross-section 10A shown in Fig.2 and the cross-section 10A' shown in Fig.4 are only that: in the cross-sections 10B, 10B', the first contour curve between the upper vertex 11 and the left vertex 13 and the third contour curve between the lower vertex 12 and the left vertex 13 form a left contour curve 10e that can be expressed using a single curve equation, the second contour curve between the upper vertex 11 and the right vertex 14 and the fourth contour curve between the lower vertex 12 and the right vertex 14 form a right contour curve 10f that can be expressed using a single curve equation. Except for the above-mentioned differences, the cross-sections 10B and 10B' can have substantially the same structure and characteristics as the cross-sections 10A and 10A', which will not be repeated here for sake of conciseness.

An optical unit structure with the cross-sections 10B, 10B' and a diffractive optical waveguide comprising such an optical unit structure have the advantage of being simple in design, and it is easy for the shapes of the left vertex 13 and the right vertex 14 to meet the design requirements during processing, that is to have conformity, which is beneficial for the control of the diffraction efficiency distribution of the diffractive optical waveguide.

The effect of the example shown in Fig.6 in terms of optical coupling efficiency and uniformity will be described below through Data Example 3.

(Data Example 3)

In Data Example 3, two grating structures composed of optical unit structures with cross-sections 10B, 10B' shown in Fig.6 are constructed, wherein:

the curve equations of the left and the right contour curves in cross-section 10B are as follows:

left contour curve 10e: $y=0.00148x^2-107.659$;
right contour curve 10f: $y=-0.00148x^2+107.659$,

wherein, the origin of the coordinates (x, y) in the above equations is located at the center of each cross-section, and the unit of the x, y coordinate values is "nm". The length of the cross-section thus constructed is L=540nm, and the maximum width is W=215nm.

The cross-section 10B' is of a shape obtained by rounding the upper and the lower vertices of the cross-section with a radius of curvature R=15 nm based on the cross-section 10B.

Based on the above-mentioned grating structure shown in Fig.6 and based on the same coupling-in light conditions into the grating structure as the above-mentioned data example, the coupling-out efficiency and nonuniformity index of the grating structure at the center of its eyebox calculated by simulation are shown in Table 3:

[Table 3]

|  | Average efficiency of field of view on both sides | Average efficiency of middle field of view | Nonuniformity |
|---|---|---|---|
| Grating structure 2 | 2.34e-4 | 4.12e-4 | 27.6% |
| Cross-section 10B | 2.88e-4 | 2.53e-4 | 6.5% |
| Cross-section 10B' | 2.87e-4 | 2.59e-4 | 5.1% |

For the convenience of comparison, Table 3 also lists the relevant data of a grating structure formed by the optical unit structure with the conventional rhombic cross-section in Data Example 1.

The light intensity distribution diagram within the field of view angle range obtained by simulation calculation is shown in Fig.6A. Fig.6A is a simulation diagram of the light intensity distribution of diffractive optical waveguides comprising different grating structures shown in Fig.6, wherein the left simulation diagram (a) corresponds to the cross-section 10B, and the right simulation graph (b) corresponds to the cross-section 10B'.

It can be seen from Table 1 and Fig.6A that the curve contour with the cross-section shown in Fig.6 can effectively improve the coupling-out efficiency of the field of view on both sides, significantly suppress the middle bright line, and improve uniformity. In addition, rounding with an appropriate radius of curvature at the upper and the lower vertices of the above-mentioned curve contour of the cross-section according to embodiments of the invention can further suppress the middle bright line and improve uniformity.

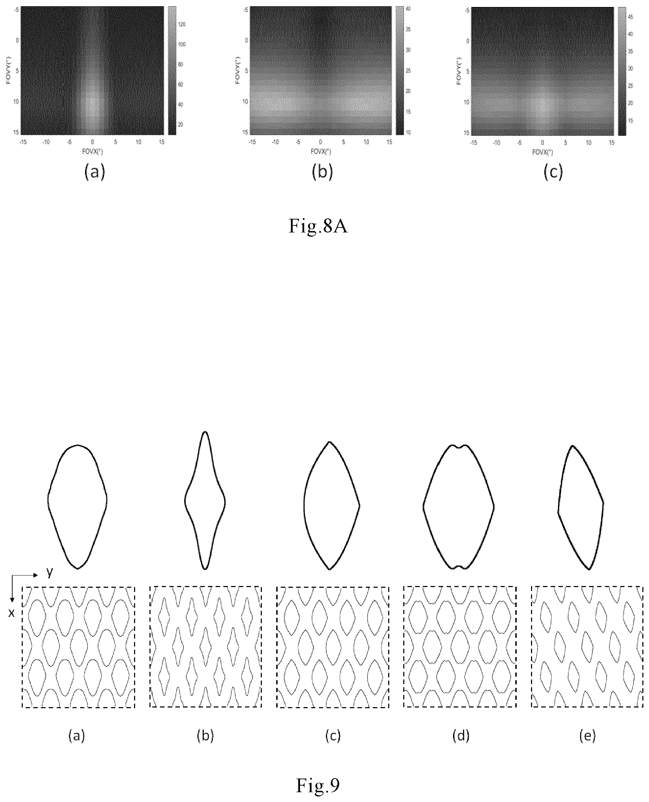

Next, another example of the cross-section of the optical unit structure according to embodiments of the present invention and its variant will be introduced with reference to Fig.7, Fig.8, and Fig.8A.

In the example shown in Fig.7, each of the upper vertex 11 and the lower vertex 12 is a single point, and each of the left vertex 13 and the right vertex 14 includes two extreme points. Graph (a) in Fig.7 shows another example of the cross-section of the optical unit structure according to embodiments of the present invention, that is, cross-section 10C. As shown in Fig.7, the cross-section 10C has substantially the same structure and characteristics as the cross-section 10A shown in Fig.2, the difference is that: in the cross-section 10C, the left vertex 13 comprises an upper left vertex 13a and a lower left vertex 13b, and a left depression is formed between the upper left vertex13a and the lower left vertex 13b; and the right vertex 14 comprises an upper right vertex 14a and a lower right vertex 14b, and a right depression is formed between the upper right vertex 14a and the lower right vertex 14b. In this way, accordingly, in cross-section 10C, the first contour curve 10a is formed between the upper vertex 11 and left upper vertex 13a, the second contour curve 10b is formed between upper vertex 11 and right upper vertex 14a, the third contour curve 10c is formed between the lower vertex 12 and the lower left vertex 13b, and the fourth contour curve 10d is formed between the lower vertex 12 and the lower right vertex 14b.

As shown in Fig.7, the upper left vertex 13a and the lower left vertex 13b have a first distance $d_1$ in the x direction, and the upper right vertex 14a and the lower right vertex 14b have a second distance $d_2$ in the x direction. Advantageously, $d_1 \leq 0.5L$, and $d_2 \leq 0.5L$; preferably $d_1 \leq 0.3L$, and $d_2 \leq 0.3L$.

Preferably, the left depression and the right depression have arc-shaped contours, so as to facilitate processing and conform with the design.

Graph (b) in Fig.7 shows a variant example of the cross-section 10C, that is, cross-section 10C'. As shown in Fig.7, the difference between the cross-section 10C' and the cross-section 10C is that, the cross-section 10C has two axes of symmetry, which are respectively parallel to the x direction and the y direction, that is, the cross-section 10C is left-right symmetrical and up-down symmetrical; and the cross-section 10C' has only the axis of symmetry parallel to the x direction, that is, the cross-section 10C' is left-right symmetric, but up-down asymmetric. As discussed above in conjunction with the example shown in Fig.2, the cross-section of the optical unit structure can have two axes of symmetry or only one axis of symmetry, or it can be non-axisymmetric. Here, an example is given in conjunction with the cross-section 10C' in Fig.7.

The effect of the example shown in Fig.7 and its variant in terms of optical coupling efficiency and uniformity will be described below with Data Example 4.

(Data Example 4)

Graph (a) in Fig.8 shows a grating structure 2' composed of an optical unit structure with a rhombic cross-section; graph (b) shows a partial schematic diagram of a grating structure 1C composed of the optical unit structure with the cross-section 10C; and graph (c) shows a partial schematic diagram of a grating structure 1C' composed of the optical unit structure having the cross-section 10C'.

The side length of the rhombus of the cross-section of the optical unit structure in the grating structure 2' is 295.8nm, and the upper and the lower vertex angles are 50°.

The curve equations of the first to the fourth contour curves of the cross-section 10C of the optical unit structure in the grating structure 1C are as follows:

$$y=a_{11}x^8+a_{12}x^7+a_{13}x^6+a_{14}x^5+a_{15}x^4+a_{16}x^3+a_{17}x^2+a_{18}x+a_{19},$$

$$y=a_{21}x^8+a_{22}x^7+a_{23}x^6+a_{24}x^5+a_{25}x^4+a_{26}x^3+a_{27}x^2+a_{28}x+a_{29},$$

$$y=a_{31}x^8+a_{32}x^7+a_{33}x^6+a_{34}x^5+a_{35}x^4+a_{36}x^3+a_{37}x^2+a_{38}x+a_{39},$$

$$y=a_{41}x^8+a_{42}x^7+a_{43}x^6+a_{44}x^5+a_{45}x^4+a_{46}x^3+a_{47}x^2+a_{48}x+a_{49},$$

wherein, the coefficients are:

$a_{11}=-2.355e-16$,   $a_{12}=-3.246e-13$,   $a_{13}=-1.839\%e-10$,
$a_{14}=-5.5e-8$,   $a_{15}=-9.23e-6$,   $a_{16}=-8.365e-4$,
$a_{17}=-3.262e-2$,   $a_{18}=1.443e-1$,   $a_{19}=-1.037e2$;
$a_{21}=2.355e-16$,   $a_{22}=3.246e-13$,   $a_{23}=1.839e-10$,
$a_{24}=5.5e-8$,   $a_{25}=9.23e-6$,   $a_{26}=8.365e-4$,
$a_{27}=3.262e-2$,   $a_{28}=1.443e-1$,   $a_{29}=1.066e2$;
$a_{31}=-2.355e-16$,   $a_{32}=3.246e-13$,   $a_{33}=-1.839e-10$,
$a_{34}=5.5e-8$,   $a_{35}=-9.23e-6$,   $a_{36}=8.365e-4$,
$a_{37}=-3.262e-2$,   $a_{38}=-1.443e-1$,   $a_{39}=-1.037e2$;
$a_{41}=-2.355e-16$,   $a_{42}=-3.246e-13$,   $a_{43}=-1.839e-10$,
$a_{44}=-5.5e-8$,   $a_{45}=-9.23e-6$,   $a_{46}=-8.365e-4$,
$a_{47}=-3.262e-2$,   $a_{48}=1.443e-1$,   $a_{49}=-1.037e2$,

wherein, the origin of the coordinates (x, y) in the above equations is located at the center of the cross-section, and the unit of the x, y coordinate values is "nm". The length of the cross-section thus constructed is L=530nm, and the maximum width is W=234nm.

The curve equations of the first to the fourth contour curves of the cross-section 10C of the optical unit structure in the grating structure 1C' are as follows:

$$y=a_{11}x^8+a_{12}x^7+a_{13}x^6+a_{14}x^5+a_{15}x^4+a_{16}x^3+a_{17}x^2+a_{18}x+a_{19},$$

$$y=a_{21}x^8+a_{22}x^7+a_{23}x^6+a_{24}x^5+a_{25}x^4+a_{26}x^3+a_{27}x^2+a_{28}x+a_{29},$$

$$y=a_{31}x^8+a_{32}x^7+a_{33}x^6+a_{34}x^5+a_{35}x^4+a_{36}x^3+a_{37}x^2+a_{38}x+a_{39},$$

$$y=a_{41}x^8+a_{42}x^7+a_{43}x^6+a_{44}x^5+a_{45}x^4+a_{46}x^3+a_{47}x^2+a_{48}x+a_{49},$$

wherein, the coefficients are:

$a_{11}=1.95e{-}15,$  $a_{12}=2.06e{-}12,$  $a_{13}=8.77e{-}10,$
$a_{14}=1.91e{-}07,$  $a_{15}=2.19e{-}05,$  $a_{16}=1.18e{-}03,$
$a_{17}=1.86e{-}02,$  $a_{18}={-}2.07e{-}01,$  $a_{19}={-}1.11e2$ ;
$a_{21}={-}1.95e{-}15,$  $a_{22}={-}2.06e{-}12,$  $a_{23}={-}8.77e{-}10,$
$a_{24}={-}1.91e{-}07,$  $a_{25}={-}2.19e{-}05,$  $a_{26}={-}1.18e{-}03,$
$a_{27}={-}1.86e{-}02,$  $a_{28}=2.07e{-}01,$  $a_{29}=1.11e2$ ;
$a_{31}=0,$  $a_{32}=0,$  $a_{33}={-}4.78e{-}12,$
$a_{34}={-}3.84e{-}09,$  $a_{35}={-}1.23e{-}06,$  $a_{36}={-}2.02e{-}04,$
$a_{37}={-}1.86e{-}02,$  $a_{38}={-}6.23e{-}01,$  $a_{39}=1.09e2;$
$a_{41}=0,$  $a_{42}=0,$  $a_{43}={-}4.78e{-}12,$
$a_{44}=3.84e{-}09,$  $a_{45}={-}1.23e{-}06,$  $a_{46}=2.02e{-}04,$
$a_{47}={-}1.86e{-}02,$  $a_{48}=6.23e{-}01,$  $a_{49}=1.09e2,$

wherein, the origin of the coordinates (x, y) in the above equations is located at the center of the cross-section, and the unit of the x, y coordinate values is "nm". The length of the cross-section thus constructed is L=560nm, and the maximum width is W=240nm.

Based on the grating structure shown in Fig.8 and the same coupling-in light as in the above data example, the coupling-out efficiency and the nonuniformity index of the grating structure at the center of its eyebox calculated by simulation are shown in Table 4:

[Table 4]

|  | Average efficiency of field of view on both sides | Average efficiency of middle field of view | Nonuniformity |
|---|---|---|---|
| **Grating structure 2'** | 2.25e-4 | 5.79e-4 | 44.0% |
| **Cross-section 1C** | 2.89e-4 | 2.44e-4 | 8.4% |
| **Cross-section 1C'** | 2.74e-4 | 2.89e-4 | 2.7% |

The light intensity distribution diagrams within the field of view angle range obtained by simulation calculations are shown in Fig.8A, where the light intensity distribution diagrams of graphs (a), (b), and (c) in Fig.8A correspond to the grating structure 2', the grating structure 1C and the grating structure 1C', respectively.

It can be seen from Table 4 and Fig.8A that, the curve contours with the cross-section 10C and the cross-section 10C' shown in Fig.8 can effectively improve the coupling-out efficiency of the field of view on both sides, significantly suppress the middle bright line and improve uniformity. In addition, simulation calculations show that when the cross-section of the optical unit structure 10 has an asymmetric shape, for example in the x direction, the above-mentioned technical effect can be well obtained, and it is expected that the uniformity can be further improved through this asymmetric shape.

Some examples of the cross-section of the optical unit structure that can be used in the diffractive optical waveguide according to embodiments of the present invention have been specifically introduced above in conjunction with the data examples. For ease of understanding, and only for purposes of illustration but not limitation, Fig.9 shows other examples of the cross-section of the optical unit structure that can be used in diffractive optical waveguides according to embodiments of the present invention and partial schematic diagrams of grating structures with these optical unit structures.

In Fig.9, graph (a) shows an example where the cross-section of the optical unit structure is asymmetrical in the x direction; graph (b) shows an example where the first to the fourth contour curves of the cross-section of the optical unit structure are concave inward ; graph (c) shows an example of an asymmetric cross-section of the optical unit structure in the y direction, wherein the cross-section is also shown to have the left contour curve (the first contour curve and the third contour curve) formed as a continuously differentiable curve, while the joint between the second contour curve and the fourth contour curve on the right is not continuously differentiable; graph (d) shows an example in which the upper and the lower vertices of the cross-section of the optical unit structure each include two convex extreme points of the contours; graph (e) shows an example where a line connecting the upper and the lower vertices of the cross-section of the optical unit structure is not parallel to the x-axis, a line connecting the left and right vertices is not parallel to the y-axis, and the optical unit structure is arranged in an array along x and y axis directions.

The diffractive optical waveguide can be applied to a display device. Such a display device can be, for example, a near-eye display device, which comprises a lens and a frame for holding the lens close to the eye, wherein the lens can comprise a diffractive optical waveguide according to embodiments of the present invention as described above. Preferably, the display device can be an augmented reality display device or a virtual reality display device.

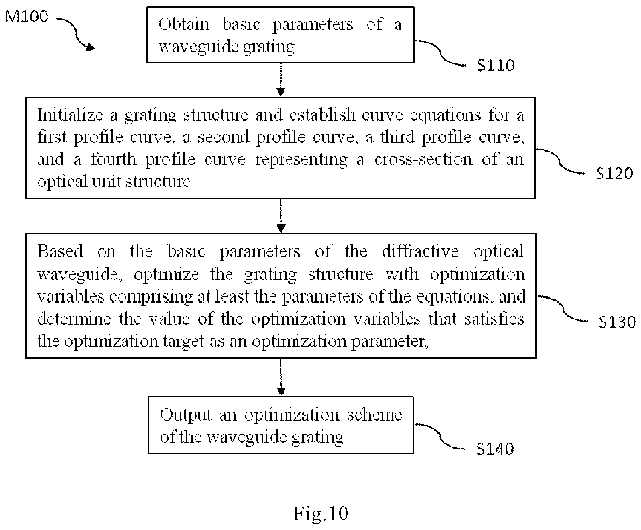

A waveguide design method, not forming part of the claimed invention, for designing the above-described diffractive optical waveguide will be described below with reference to Fig.10. As shown in Fig. 10, the waveguide design method M100 comprises the following processes:

S110: obtain basic parameters of the diffractive optical waveguide;
S120: initialize the grating structure in the diffractive optical waveguide, and establish curve equations for representing the first contour curve, the second contour curve, the third contour curve, and the fourth contour curve defining the cross-section of the optical unit structure in the grating structure;
S130: based on the basic parameters of the diffractive optical waveguide, optimize the grating structure with optimization variables comprising at least the equation parameters, and determine values of the optimization variables that satisfy an optimization target as optimized parameters; and
S140: output an optimized configuration of the diffractive optical waveguide.

The basic parameters obtained in the process S110 comprise a refractive index of the waveguide substrate, a refractive index of the grating structure layer, and a working wavelength of the waveguide substrate. Optionally, in some embodiments, some other parameters can be further obtained in the process S110, such as a thickness of the waveguide substrate, and a desired range of the field of view angle of the waveguide grating.

In the process S120, initializing the grating structure can comprise setting relevant parameters of the array formed by the optical unit structure. For example, the grating structure can be initialized so that the array comprises a plurality of rows extending along the y direction formed by arranging a plurality of optical unit structures, the plurality of rows are arranged at a predetermined interval D in the x direction, and the optical unit structures 10 in each row are arranged at a period P, and the optical unit structures in two adjacent rows have a predetermined misalignment amount s in the y direction.

In the process S120, different numbers of curve equations can be established for the contour curve of the cross-section of the optical unit structure as required, and the number includes but is not limited to 2, 3, or 4.

In the process S130, the optimization target comprises uniformity of light energy distribution of the outgoing light field of the diffractive optical waveguide and/or light energy coupling efficiency of the diffractive optical waveguide.

In some embodiments, the optimization variables can comprise at least one of number of curve equations, depth/height of the optical unit structures in a direction perpendicular to the plane, and parameters of the array in which the optical unit structures are arranged.

In some embodiments, the optimization variables can comprise at least one of the following parameters of the aforementioned array: the predetermined interval D of a plurality of rows in the x direction, the period P of the optical unit structure in a row, and the misalignment amount s of the optical unit structures in two adjacent rows in the y direction.

During the optimization process of process S130, as needed for coupling-out efficiency and uniformity of the waveguide, appropriate optimization methods, such as genetic algorithm, particle swarm algorithm, etc., can be used to optimize variables.

The optimized configuration output in process S140 comprises the optimized parameters obtained through the optimization process in process S130.

According to other embodiments of the present invention, based on the waveguide design method described above with reference to Fig. 10, a waveguide formation method can be provided, which comprises: designing the diffractive optical waveguide by using the waveguide design method described above; and based on the output optimized configuration of the diffractive optical waveguide, the diffractive optical waveguide is formed by using micro-nano or semiconductor processing technology. For example, after optimizing the optimal parameters of the diffractive optical waveguide, a columnar concave structure or a convex structure corresponding to the optical unit structure is directly formed on the waveguide substrate by using the semiconductor processing technology according to the parameters; or, a complementary structure corresponding to the optical unit structure is formed on a wafer template, and then the grating structure is transferred to the waveguide substrate through micro-nano imprinting technology.

**Claims**

1. A diffractive optical waveguide (100), comprising a waveguide substrate (100a) and a grating structure (1) formed on the waveguide substrate (100a), wherein the grating structure (1) is used to couple at least a part of light that propagates into it within the waveguide substrate (100a) along a coupling-in direction, out of the waveguide substrate through diffraction, the grating structure (1) comprises a plurality of optical unit structures (10) arranged in an array along a plane, and the optical unit structures (10) are columnar structures, and have cross-sections (10A, 10A', 10B, 10B', 10C, 10C') parallel to the plane;

the array comprises a plurality of rows of optical unit structures (10), the plurality of rows have a predetermined interval D in the first direction (x) and extend along a second direction (y) perpendicular to the first direction (x), the optical unit structures (10) in each row are arranged at a period P, and the optical unit structures (10) in two adjacent rows have a predetermined misalignment amount s in the second direction (y), and s=P/n, wherein $1<n \leq 10$;

the cross-section (10A, 10A', 10B, 10B', 10C, 10C') as a whole has a shape with two small ends and a large middle part and has an upper vertex (11) and a lower vertex (12) in the first direction (x) and a left vertex (13) and a right vertex (14) in the second direction (y), and the upper vertex (11), the lower vertex (12), the left vertex (13), and the right vertex (14) are respectively convex extreme points of contour of the cross-section; and

a distance between the upper vertex (11) and the lower vertex (12) of the cross-section (10A, 10A', 10B, 10B', 10C, 10C') in the first direction (x) is length L of the cross-section, a maximum distance between the left vertex (13) and the right vertex (14) in the second direction (y) is the maximum width W of the cross-section, and $0.4L \leq W \leq 0.8L$;

**characterized in that**: a first contour curve (10a), a second contour curve (10b), a third contour curve (10c), and a fourth contour curve (10d) are respectively formed between the upper vertex (11) and the left vertex (13), between the upper vertex (11) and the right vertex (14), between the lower vertex (12) and the left vertex (13), and between the lower vertex (12) and the right vertex (14), the first contour curve (10a) and the second contour curve (10b) are configured such that as approaching the upper vertex (11), a width of the cross-section in the second direction (y) gradually decreases, and the third contour curve (10c) and the fourth contour curve (10d) are configured such that as approaching the lower vertex (12), a width of the cross-section in the second direction (y) gradually decreases; and

the first contour curve (10a) and the second contour curve (10b) are smooth and continuous at the upper vertex (11) and have an upper radius of curvature $R_1$, and the third contour curve (10c) and the fourth contour curve (10d) are smooth and continuous at the lower vertex (12) and have a lower radius of curvature $R_2$, wherein $R_1 \leq L/19$, $R_2 \leq L/19$.

2. The diffractive optical waveguide (100) of claim 1, wherein a connecting line between the upper vertex (11) and the lower vertex (12) is parallel to the first direction (x), and the cross-section (10A, 10A', 10B, 10B', 10C, 10C') is symmetrical about the connecting line.

3. The diffractive optical waveguide (100) of claim 1, wherein the cross-section (10A, 10A', 10B, 10B', 10C) is symmetrical about an axis which is parallel to the second direction (y).

4. The diffractive optical waveguide (100) of any one of claims 1-3, wherein the left vertex (13) comprises an upper left vertex (13a) and a lower left vertex (13b), and a left depression is formed between the upper left vertex (13a) and the lower left vertex (13b), and

the right vertex (14) comprises an upper right vertex (14a) and a lower right vertex (14b), and a right depression is formed between the upper right vertex (14a) and the lower right vertex (14b); and
the first contour curve (10a) is formed between the upper vertex (11) and the upper left vertex (13a), the second contour curve (10b) is formed between the upper vertex (11) and the upper right vertex (14a), the third contour curve (10c) is formed between the lower vertex (12) and the lower left vertex (13b), and the fourth contour curve (10d) is formed between the lower vertex (12) and the lower right vertex (14b).

5. The diffractive optical waveguide (100) of claim 4, wherein a distance between the upper left vertex (13a) and the lower left vertex (13b) in the first direction (x) is a first distance $d_1$, and a distance between the upper right vertex (14a) and the lower right vertex (14b) in the first direction (x) is a second distance $d_2$, $d_1 \leq 0.5L$, and $d_2 \leq 0.5L$.

6. The diffractive optical waveguide (100) of claim 5, wherein the first distance $d_1$ and the second distance $d_2$ satisfy that: $d_1 \leq 0.3L$, and $d_2 \leq 0.3L$.

7. The diffractive optical waveguide (100) of claim 4, wherein the left depression and the right depression have arc-shaped contours.

8. The diffractive optical waveguide (100) of any one of claims 1-7, wherein the cross-section of the optical unit structure (10) has a curve contour which is continuously differentiable at the upper vertex (11), the lower vertex (12), the left vertex (13), and the right vertex (14).

9. A display device, comprising the diffractive optical waveguide (100) of any one of claims 1-8.

10. The display device of claim 9, wherein the display device is a near-eye display device and comprises a lens and a frame for holding the lens close to the eye, and the lens comprises the diffractive optical waveguide (100).

11. A waveguide formation method for the diffractive optical waveguide of claim 1, comprising:

> (1) designing the diffractive optical waveguide by using a waveguide design method (M100) comprising:

>> (1a) obtaining basic parameters of the diffractive optical waveguide, the basic parameters comprising a refractive index of the waveguide substrate, a refractive index of the grating structure, and a working wavelength of the waveguide substrate;
>> (1b) initializing the grating structure in the diffractive optical waveguide, and establishing curve equations for representing the first contour curve, the second contour curve, the third contour curve, and the fourth contour curve defining the cross-section of the optical unit structure in the grating structure, the curve equations comprising equation parameters;
>> (1c) based on the basic parameters of the diffractive optical waveguide, optimizing the grating structure with optimization variables comprising at least the equation parameters, and determining values of the optimization variables that satisfy an optimization target as optimized parameters, the optimization target comprising uniformity of light energy distribution of an outgoing light field of the diffractive optical waveguide and/or light energy coupling efficiency of the diffractive optical waveguide; and
>> (1d) outputting an optimized configuration of the diffractive optical waveguide, which comprises the optimized parameters; and

> (2) based on the optimized configuration of the diffractive optical waveguide output, forming the diffractive optical waveguide by using micro-nano or semiconductor processing technology.

12. The waveguide formation method of claim 11, wherein the optimization variables further comprise at least one selected from a group consisted of number of the curve equations, depth/height of the optical unit structure in a direction perpendicular to the plane, and parameters of the array in which the optical unit structures are arranged.

13. The waveguide formation method of claim 12, wherein the number of the curve equations is 2, 3, or 4.

14. The waveguide formation method of claim 12, wherein the array comprises a plurality of rows extending along the second direction and formed by the arrangement of the plurality of optical unit structures, and the optimization variable comprises at least one of the following parameters of the array: a predetermined interval D of the plurality of rows in the first direction, a period P of the optical unit structure in the row, and a misalignment amount of the optical unit structure in the second direction in the two adjacent rows of the plurality of rows.

**Patentansprüche**

1. Diffraktiver optischer Wellenleiter (100), umfassend ein Wellenleiter-Substrat (100a) und eine Gitterstruktur (1), die auf dem Wellenleiter-Substrat (100a) ausgebildet ist, wobei die Gitterstruktur (1) verwendet wird, um zumindest einen Teil von Licht, das innerhalb des Wellenleiter-Substrats (100a) entlang einer Einkoppelrichtung propagiert, durch Diffraktion aus dem Wellenleiter-Substrat auszukoppeln, wobei die Gitterstruktur (1) eine Vielzahl von optischen Einheitsstrukturen (10) umfasst, die in einem Raster entlang einer Ebene angeordnet sind, und die optischen Einheitsstrukturen (10) säulenförmige Strukturen sind und Querschnitte (10A, 10A', 10B, 10B', 10C, 10C') parallel zu der Ebene aufweisen;

> das Raster eine Vielzahl von Reihen von optischen Einheitsstrukturen (10) umfasst, die Vielzahl von Reihen einen vorbestimmten Abstand D in der ersten Richtung (x) aufweisen und sich entlang einer zweiten Richtung (y) senkrecht zu der ersten Richtung (x) erstrecken, die optischen Einheitsstrukturen (10) in jeder Reihe in einer Periode P angeordnet sind, und die optischen Einheitsstrukturen (10) in zwei benachbarten Reihen einen vorbestimmten Ausrichtungsfehler-Betrag s in der zweiten Richtung (y) aufweisen, und s=P/n, wobei $1<n\leq 10$; der Querschnitt (10A, 10A', 10B, 10B', 10C, 10C') als Ganzes eine Form mit zwei kleinen Enden und einem großen Mittelteil aufweist und einen oberen Scheitelpunkt (11) und einen unteren Scheitelpunkt (12) in der ersten Richtung (x) und einen linken Scheitelpunkt (13) und einen rechten Scheitelpunkt (14) in der zweiten Richtung (y) aufweist, und der obere Scheitelpunkt (11), der untere Scheitelpunkt (12), der linke Scheitelpunkt (13) und der rechte Scheitelpunkt (14) jeweils konvexe Extrempunkte der Kontur des Querschnitts sind; und

ein Abstand zwischen dem oberen Scheitelpunkt (11) und dem unteren Scheitelpunkt (12) des Querschnitts (10A, 10A', 10B, 10B', 10C, 10C') in der ersten Richtung (x) die Länge L des Querschnitts ist, ein maximaler Abstand zwischen dem linken Scheitelpunkt (13) und dem rechten Scheitelpunkt (14) in der zweiten Richtung (y) die maximale Breite W des Querschnitts ist, und $0,4L \leq W \leq 0,8L$;

**dadurch gekennzeichnet, dass**: eine erste Konturkurve (10a), eine zweite Konturkurve (10b), eine dritte Konturkurve (10c) und eine vierte Konturkurve (10d) jeweils zwischen dem oberen Scheitelpunkt (11) und dem linken Scheitelpunkt (13), zwischen dem oberen Scheitelpunkt (11) und dem rechten Scheitelpunkt (14), zwischen dem unteren Scheitelpunkt (12) und dem linken Scheitelpunkt (13) und zwischen dem unteren Scheitelpunkt (12) und dem rechten Scheitelpunkt (14) ausgebildet sind, die erste Konturkurve (10a) und die zweite Konturkurve (10b) so konfiguriert sind, dass bei Annäherung an den oberen Scheitelpunkt (11) eine Breite des Querschnitts in der zweiten Richtung (y) allmählich abnimmt, und die dritte Konturkurve (10c) und die vierte Konturkurve (10d) so konfiguriert sind, dass bei Annäherung an den unteren Scheitelpunkt (12) eine Breite des Querschnitts in der zweiten Richtung (y) allmählich abnimmt; und

die erste Konturkurve (10a) und die zweite Konturkurve (10b) an dem oberen Scheitelpunkt (11) glatt und kontinuierlich sind und einen oberen Krümmungsradius $R_1$ aufweisen, und die dritte Konturkurve (10c) und die vierte Konturkurve (10d) an dem unteren Scheitelpunkt (12) glatt und kontinuierlich sind und einen unteren Krümmungsradius $R_2$ aufweisen, wobei $R_1 \leq L/19$, $R_2 \leq L/19$.

2. Diffraktiver optischer Wellenleiter (100) nach Anspruch 1, wobei eine Verbindungslinie zwischen dem oberen Scheitelpunkt (11) und dem unteren Scheitelpunkt (12) parallel zu der ersten Richtung (x) ist, und der Querschnitt (10A, 10A', 10B, 10B', 10C, 10C') symmetrisch um die Verbindungslinie ist.

3. Diffraktiver optischer Wellenleiter (100) nach Anspruch 1, wobei der Querschnitt (10A, 10A', 10B, 10B', 10C) symmetrisch um eine Achse ist, die parallel zu der zweiten Richtung (y) ist.

4. Diffraktiver optischer Wellenleiter (100) nach einem der Ansprüche 1-3, wobei der linke Scheitelpunkt (13) einen oberen linken Scheitelpunkt (13a) und einen unteren linken Scheitelpunkt (13b) umfasst, und eine linke Vertiefung zwischen dem oberen linken Scheitelpunkt (13a) und dem unteren linken Scheitelpunkt (13b) gebildet ist, und

der rechte Scheitelpunkt (14) einen oberen rechten Scheitelpunkt (14a) und einen unteren rechten Scheitelpunkt (14b) umfasst, und eine rechte Vertiefung zwischen dem oberen rechten Scheitelpunkt (14a) und dem unteren rechten Scheitelpunkt (14b) gebildet ist; und die erste Konturkurve (10a) zwischen dem oberen Scheitelpunkt (11) und dem oberen linken Scheitelpunkt (13a) gebildet ist, die zweite Konturkurve (10b) zwischen dem oberen Scheitelpunkt (11) und dem oberen rechten Scheitelpunkt (14a) gebildet ist, die dritte Konturkurve (10c) zwischen dem unteren Scheitelpunkt (12) und dem unteren linken Scheitelpunkt (13b) gebildet ist, und die vierte Konturkurve (10d) zwischen dem unteren Scheitelpunkt (12) und dem unteren rechten Scheitelpunkt (14b) gebildet ist.

5. Diffraktiver optischer Wellenleiter (100) nach Anspruch 4, wobei ein Abstand zwischen dem oberen linken Scheitelpunkt (13a) und dem unteren linken Scheitelpunkt (13b) in der ersten Richtung (x) ein erster Abstand $d_1$ ist, und ein Abstand zwischen dem oberen rechten Scheitelpunkt (14a) und dem unteren rechten Scheitelpunkt (14b) in der ersten Richtung (x) ein zweiter Abstand $d_2$ ist, $d_1 \leq 0,5L$, und $d_2 \leq 0,5L$.

6. Diffraktiver optischer Wellenleiter (100) nach Anspruch 5, wobei der erste Abstand $d_1$ und der zweite Abstand $d_2$ erfüllen, dass: $d_1 \leq 0,3L$, und $d_2 \leq 0,3L$.

7. Diffraktiver optischer Wellenleiter (100) nach Anspruch 4, wobei die linke Vertiefung und die rechte Vertiefung bogenförmige Konturen aufweisen.

8. Diffraktiver optischer Wellenleiter (100) nach einem der Ansprüche 1-7, wobei der Querschnitt der optischen Einheitsstruktur (10) eine Kurvenkontur aufweist, die an dem oberen Scheitelpunkt (11), dem unteren Scheitelpunkt (12), dem linken Scheitelpunkt (13) und dem rechten Scheitelpunkt (14) kontinuierlich differenzierbar ist.

9. Anzeigevorrichtung, umfassend den diffraktiven optischen Wellenleiter (100) nach einem der Ansprüche 1-8.

10. Anzeigevorrichtung nach Anspruch 9, wobei die Anzeigevorrichtung eine augennahe Anzeigevorrichtung ist und eine Linse und einen Rahmen zum Halten der Linse nahe dem Auge umfasst und die Linse den diffraktiven optischen Wellenleiter (100) umfasst.

11. Verfahren zur Ausbildung eines Wellenleiters für den diffraktiven optischen Wellenleiter nach Anspruch 1, umfassend:

(1) Entwerfen des diffraktiven optischen Wellenleiters unter Verwendung eines Verfahrens zum Entwerfen eines Wellenleiters (M100), umfassend:

(1a) Erhalten von Basisparametern des diffraktiven optischen Wellenleiters, wobei die Basisparameter einen Brechungsindex des Wellenleiter-Substrats, einen Brechungsindex der Gitterstruktur und eine Arbeitswellenlänge des Wellenleiter-Substrats umfassen;
(1b) Initialisieren der Gitterstruktur in dem diffraktiven optischen Wellenleiter und Erstellen von Kurvengleichungen zum Darstellen der ersten Konturkurve, der zweiten Konturkurve, der dritten Konturkurve und der vierten Konturkurve, die den Querschnitt der optischen Einheitsstruktur in der Gitterstruktur definieren, wobei die Kurvengleichungen Gleichungsparameter umfassen;
(1c) basierend auf den Basisparametern des diffraktiven optischen Wellenleiters, Optimieren der Gitterstruktur mit Optimierungsvariablen, die mindestens die Gleichungsparameter umfassen, und Bestimmen von Werten der Optimierungsvariablen, die ein Optimierungsziel als optimierte Parameter erfüllen, wobei das Optimierungsziel die Gleichmäßigkeit der Lichtenergieverteilung eines ausgehenden Lichtfeldes des diffraktiven optischen Wellenleiters und/oder die Lichtenergiekopplungseffizienz des diffraktiven optischen Wellenleiters umfasst; und
(1d) Ausgeben einer optimierten Konfiguration des diffraktiven optischen Wellenleiters, die die optimierten Parameter umfasst; und

(2) basierend auf der optimierten Konfiguration der Ausgabe des diffraktiven optischen Wellenleiters, Bilden des diffraktiven optischen Wellenleiters unter Verwendung von Mikro-Nano- oder Halbleiter-Verarbeitungstechnologie.

12. Verfahren zur Ausbildung eines Wellenleiters nach Anspruch 11, wobei die Optimierungsvariablen ferner mindestens eines aus einer Gruppe, bestehend aus der Anzahl der Kurvengleichungen, der Tiefe/Höhe der optischen Einheitsstruktur in einer Richtung senkrecht zu der Ebene und Parametern des Rasters, in dem die optischen Einheitsstrukturen angeordnet sind, umfassen.

13. Verfahren zur Ausbildung eines Wellenleiters nach Anspruch 12, wobei die Anzahl der Kurvengleichungen 2, 3 oder 4 beträgt.

14. Verfahren zur Ausbildung eines Wellenleiters nach Anspruch 12, wobei das Raster eine Vielzahl von Reihen umfasst, die sich entlang der zweiten Richtung erstrecken und durch die Anordnung der Vielzahl von optischen Einheitsstrukturen ausgebildet werden, und die Optimierungsvariable mindestens einen der folgenden Parameter des Rasters umfasst: einen vorbestimmten Abstand D der Vielzahl von Reihen in der ersten Richtung, eine Periode P der optischen Einheitsstruktur in der Reihe und einen Ausrichtungsfehler-Betrag der optischen Einheitsstruktur in der zweiten Richtung in den zwei benachbarten Reihen der Vielzahl von Reihen.

## Revendications

1. Guide d'ondes optique diffractif (100), comprenant un substrat de guide d'ondes (100a) et une structure de réseau (1) formée sur le substrat de guide d'ondes (100a), dans lequel la structure de réseau (1) est utilisée pour coupler au moins une partie de la lumière qui se propage dans celle-ci à l'intérieur du substrat de guide d'ondes (100a) le long d'une direction de couplage, hors du substrat de guide d'ondes par diffraction, la structure de réseau (1) comprend une pluralité de structures unitaires optiques (10) agencées en un réseau le long d'un plan, et les structures unitaires optiques (10) sont des structures colonnaires, et ont des sections transversales (10A, 10A', 10B, 10B', 10C, 10C') parallèles au plan ;

le réseau comprend une pluralité de rangées de structures unitaires optiques (10), la pluralité de rangées ont un intervalle prédéterminé D dans la première direction (x) et s'étendent le long d'une seconde direction (y) perpendiculaire à la première direction (x), les structures unitaires optiques (10) dans chaque rangée sont agencées à une période P, et les structures unitaires optiques (10) dans deux rangées adjacentes ont une quantité de désalignement prédéterminée s dans la seconde direction (y), et s = P/n, dans lequel $1 < n \leq 10$ ; la section transversale (10A, 10A', 10B, 10B', 10C, 10C') dans son ensemble a une forme avec deux petites extrémités et une grande partie médiane et a un sommet supérieur (11) et un sommet inférieur (12) dans la première direction (x) et un sommet gauche (13) et un sommet droit (14) dans la seconde direction (y), et le sommet supérieur (11), le sommet inférieur (12), le sommet gauche (13), et le sommet droit (14) sont respectivement des points extrêmes convexes de contour de la section transversale ; et

une distance entre le sommet supérieur (11) et le sommet inférieur (12) de la section transversale (10A, 10A', 10B, 10B', 10C, 10C') dans la première direction (x) est la longueur L de la section transversale, une distance maximale entre le sommet gauche (13) et le sommet droit (14) dans la seconde direction (y) est la largeur maximale W de la section transversale, et $0{,}4L \leq W \leq 0{,}8L$ ;

**caractérisé en ce que** : une première courbe de contour (10a), une deuxième courbe de contour (10b), une troisième courbe de contour (10c), et une quatrième courbe de contour (10d) sont respectivement formées entre le sommet supérieur (11) et le sommet gauche (13), entre le sommet supérieur (11) et le sommet droit (14), entre le sommet inférieur (12) et le sommet gauche (13), et entre le sommet inférieur (12) et le sommet droit (14), la première courbe de contour (10a) et la deuxième courbe de contour (10b) sont configurées de sorte que lorsqu'elles s'approchent du sommet supérieur (11), une largeur de la section transversale dans la seconde direction (y) diminue progressivement, et la troisième courbe de contour (10c) et la quatrième courbe de contour (10d) sont configurées de sorte que lorsqu'elles s'approchent du sommet inférieur (12), une largeur de la section transversale dans la seconde direction (y) diminue progressivement ; et

la première courbe de contour (10a) et la deuxième courbe de contour (10b) sont lisses et continues au niveau du sommet supérieur (11) et ont un rayon de courbure supérieur $R_1$, et la troisième courbe de contour (10c) et la quatrième courbe de contour (10d) sont lisses et continues au niveau du sommet inférieur (12) et ont un rayon de courbure inférieur $R_2$, dans lequel $R_1 \leq L/19$, $R_2 \leq L/19$.

2. Guide d'ondes optique diffractif (100) selon la revendication 1, dans lequel une ligne de connexion entre le sommet supérieur (11) et le sommet inférieur (12) est parallèle à la première direction (x), et la section transversale (10A, 10A', 10B, 10B', 10C, 10C') est symétrique autour de la ligne de connexion.

3. Guide d'ondes optique diffractif (100) selon la revendication 1, dans lequel la section transversale (10A, 10A', 10B, 10B', 10C) est symétrique autour d'un axe qui est parallèle à la seconde direction (y).

4. Guide d'ondes optique diffractif (100) selon l'une quelconque des revendications 1 à 3, dans lequel le sommet gauche (13) comprend un sommet gauche supérieur (13a) et un sommet gauche inférieur (13b), et un creux gauche est formé entre le sommet gauche supérieur (13a) et le sommet gauche inférieur (13b), et

le sommet droit (14) comprend un sommet droit supérieur (14a) et un sommet droit inférieur (14b), et un creux droit est formé entre le sommet droit supérieur (14a) et le sommet droit inférieur (14b) ; et

la première courbe de contour (10a) est formée entre le sommet supérieur (11) et le sommet gauche supérieur (13a), la deuxième courbe de contour (10b) est formée entre le sommet supérieur (11) et le sommet droit supérieur (14a), la troisième courbe de contour (10c) est formée entre le sommet inférieur (12) et le sommet gauche inférieur (13b), et la quatrième courbe de contour (10d) est formée entre le sommet inférieur (12) et le sommet droit inférieur (14b).

5. Guide d'ondes optique diffractif (100) selon la revendication 4, dans lequel une distance entre le sommet gauche supérieur (13a) et le sommet gauche inférieur (13b) dans la première direction (x) est une première distance $d_1$, et une distance entre le sommet droit supérieur (14a) et le sommet droit inférieur (14b) dans la première direction (x) est une seconde distance $d_2$, $d_1 \leq 0{,}5L$, et $d_2 \leq 0{,}5L$.

6. Guide d'ondes optique diffractif (100) selon la revendication 5, dans lequel la première distance $d_1$ et la seconde distance $d_2$ satisfont à : $d_1 \leq 0{,}3L$, et $d_2 \leq 0{,}3L$.

7. Guide d'ondes optique diffractif (100) selon la revendication 4, dans lequel le creux gauche et le creux droit ont des contours en forme d'arc.

8. Guide d'ondes optique diffractif (100) selon l'une quelconque des revendications 1 à 7, dans lequel la section transversale de la structure d'unité optique (10) a un contour de courbe qui est différentiable en continu au niveau du sommet supérieur (11), du sommet inférieur (12), du sommet gauche (13), et du sommet droit (14).

9. Dispositif d'affichage, comprenant le guide d'ondes optique diffractif (100) selon l'une quelconque des revendications 1 à 8.

10. Dispositif d'affichage selon la revendication 9, dans lequel le dispositif d'affichage est un dispositif d'affichage proche de l'oeil et comprend une lentille et un cadre pour maintenir la lentille près de l'oeil, et la lentille comprend le guide d'ondes optique diffractif (100).

11. Procédé de formation de guide d'ondes pour le guide d'ondes optique diffractif selon la revendication 1, comprenant :

(1) la conception du guide d'ondes optique diffractif en utilisant un procédé de conception de guide d'ondes (M100) comprenant :

(1a) l'obtention de paramètres de base du guide d'ondes optique diffractif, les paramètres de base comprenant un indice de réfraction du substrat de guide d'ondes, un indice de réfraction de la structure de réseau, et une longueur d'onde de travail du substrat de guide d'ondes ;
(1b) l'initialisation de la structure de réseau dans le guide d'ondes optique diffractif, et l'établissement d'équations de courbe pour représenter la première courbe de contour, la deuxième courbe de contour, la troisième courbe de contour, et la quatrième courbe de contour définissant la section transversale de la structure unitaire optique dans la structure de réseau, les équations de courbe comprenant des paramètres d'équation ;
(1c) sur la base des paramètres de base du guide d'ondes optique diffractif, l'optimisation de la structure de réseau avec des variables d'optimisation comprenant au moins les paramètres d'équation, et la détermination de valeurs des variables d'optimisation qui satisfont à une cible d'optimisation en tant que paramètres optimisés, la cible d'optimisation comprenant une uniformité de distribution d'énergie lumineuse d'un champ lumineux sortant du guide d'ondes optique diffractif et/ou une efficacité de couplage d'énergie lumineuse du guide d'ondes optique diffractif ; et
(1d) la sortie d'une configuration optimisée du guide d'ondes optique diffractif, qui comprend les paramètres optimisés ; et

(2) sur la base de la configuration optimisée de la sortie de guide d'ondes optique diffractif, la formation du guide d'ondes optique diffractif en utilisant une technologie de traitement micro-nano ou semi-conducteur.

12. Procédé de formation de guide d'ondes selon la revendication 11, dans lequel les variables d'optimisation comprennent en outre au moins l'un sélectionné dans un groupe constitué du nombre d'équations de courbe, de la profondeur/hauteur de la structure unitaire optique dans une direction perpendiculaire au plan, et de paramètres du réseau dans lequel les structures unitaires optiques sont agencées.

13. Procédé de formation de guide d'ondes selon la revendication 12, dans lequel le nombre d'équations de courbe est 2, 3, ou 4.

14. Procédé de formation de guide d'ondes selon la revendication 12, dans lequel le réseau comprend une pluralité de rangées s'étendant le long de la seconde direction et formées par l'agencement de la pluralité de structures unitaires optiques, et la variable d'optimisation comprend au moins l'un des paramètres suivants du réseau : un intervalle prédéterminé D de la pluralité de rangées dans la première direction, une période P de la structure unitaire optique dans la rangée, et une quantité de désalignement de la structure unitaire optique dans la seconde direction dans les deux rangées adjacentes de la pluralité de rangées.

Fig.1

Fig.2

(a)                                    (b)

Fig.3

(a)                                    (b)

Fig.3A

Fig.4

R ≈ L/33　　　　R ≈ L/19　　　　R ≈ L/8　　　　R ≈ L/5

(a)　　　　　　　(b)　　　　　　　(c)　　　　　　　(d)

Fig.5

(a)　　　　　　　(b)　　　　　　　(c)　　　　　　　(d)

Fig.5A

(a)　　　　　　　　　　　　　(b)

Fig.6

(a)                      (b)

Fig.6A

(a)                      (b)

Fig.7

(a)          (b)          (c)

Fig.8

(a)  (b)  (c)

Fig.8A

(a)  (b)  (c)  (d)  (e)

Fig.9

M100

Obtain basic parameters of a
waveguide grating

S110

Initialize a grating structure and establish curve equations for a
first profile curve, a second profile curve, a third profile curve,
and a fourth profile curve representing a cross-section of an
optical unit structure

S120

Based on the basic parameters of the diffractive optical
waveguide, optimize the grating structure with optimization
variables comprising at least the parameters of the equations, and
determine the value of the optimization variables that satisfies
the optimization target as an optimization parameter,

S130

Output an optimization scheme
of the waveguide grating

S140

Fig.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200110261 A1
- WO 2022049104 A1